# EUROPEAN PATENT APPLICATION

(11) **EP 4 700 963 A1**
(43) Date of publication of application: **25.02.2026**
(21) Application number: 23939359.8
(22) Date of filing: 14.12.2023
(51) Int. Cl.: H01M 50/454, H01M 50/457, H01M 50/417

(54) **SEPARATOR AND PREPARATION METHOD THEREFOR, AND BATTERY CELL, BATTERY AND ELECTRIC DEVICE**

(30) Priority: 26.05.2023 CN 202310611765
(71) Applicant: Contemporary Amperex Technology Co., Limited, Ningde, Fujian 352100 (CN)
(72) Inventor: YANG, Jian, Ningde, Fujian 352100 (CN); XIA, Zhonghui, Ningde, Fujian 352100 (CN); WANG, Yaohui, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN)
(74) Representative: Lorenz Seidler Gossel Part. mbB
(86) International application number: PCT/CN2023/138900
(87) International publication number: WO 2024/244391

(57) **Abstract**

This application discloses a separator and a preparation method thereof, a battery cell, a battery, and an electric device, where the separator includes at least two base films and a functional layer interposed between two adjacent base films, and the base film includes at least two components. A technical solution of this application achieves performance control of the base film and even the separator by incorporating multiple components with controllable contents in film layers of the base film.

## Description

### REFERENCE TO RELATED APPLICATIONS

This application claims priority to Chinese Patent Application No. 202310611765.8, filed on May 26, 2023, which is incorporated herein by reference in its entirety.

### TECHNICAL FIELD

This application relates to the technical field of lithium-ion batteries, and in particular, to a separator and a preparation method thereof, a battery cell, a battery, and an electric device.

### BACKGROUND

In the related art, multilayer composite separators cannot achieve multiple functions to meet the needs of different batteries. Therefore, there is an urgent need for a separator capable of meeting the requirements of various batteries.

### SUMMARY

The main objective of this application is to provide a separator to meet the design requirements for the performance of a base film and even the separator through the controllable design of component contents in the base film.

To achieve the above objective, this application provides a separator, including at least two base films and a functional layer interposed between two adjacent base films, where the base film includes at least two components.

In one or more embodiments of this application, the performance of the base film and even the separator is controlled by incorporating multiple components with controllable contents in the base film and providing a corresponding functional layer interposed between two adjacent base films. Since the base film includes at least two components with controllable contents, the performance of the base film is controllable due to the controllable component contents.

In some embodiments of this application, the base film includes at least two film layers with each film layer including at least two components.

In one or more embodiments of this application, through the composite of film layers with controllable components and defined structures, the performance of the base film is controllable due to the controllable contents of the components based on the components and complementary structures of the film layers. For example, two film layers are provided with each film layer including two components, namely, polyethylene and polypropylene, and then a resulting composite base film combines the properties of both polymers of polyethylene and polypropylene, namely, a high melting point and stability of polypropylene and the good wettability of polyethylene. The performance can be controlled and customized by adjusting contents of polyethylene and polypropylene. To be specific, an increase in a percentage of polypropylene content can increase a melting point and improve stability of the corresponding film layer, while an increase in a percentage of polyethylene content can improve wettability of a corresponding film layer. Due to the different structures of the two film layers, the final performance such as melting point, stability, and wettability of the separator formed by the two film layers is also affected by the combination effect of the structures of the two film layers. The functional layer can be designed according to actual needs, for example, the functional layer may be used for thermal insulation and/or improving the chemical stability of the separator and/or enhancing the wettability of the separator.

In some embodiments of this application, two to four film layers are provided with each film layer including two to four components.

In one or more embodiments of this application, when two to four film layers are provided, such as two, three, or four layers, thermal shrinkage of the base film can be kept within an appropriate range, and excessively large internal resistance of the electrode assembly due to an overly thick base film, which affects Li⁺ mass transfer, can be reduced. When each film layer includes two to four components, such as two, three, or four components, precise control of the separator performance can be achieved by controlling the component contents in the film layers and combining film layers with different structures.

In some embodiments of this application, a thickness of the base film is 3 µm to 15 µm.

In one or more embodiments of this application, when the thickness of the base film is 3 µm to 15 µm, such as 3 µm, 4 µm, 5 µm, 6 µm, 7 µm, 8 µm, 9 µm, 10 µm, 11 µm, 12 µm, 13 µm, 14 µm, or 15 µm, increased thermal shrinkage of the base film caused by excessive thinning of the base film can be reduced, and an excessively large internal resistance of the electrode assembly caused by an overly thick base film, which affects Li⁺ mass transfer, can be reduced.

In some embodiments of this application, a porosity of the base film is 30% to 70%; and/or a pore diameter of the base film is 100 nm to 800 nm; and/or an areal density of the base film is 2 g/m² to 10 g/m².

In one or more embodiments of this application, the porosity of the base film is 30% to 70%, such as 30%, 40%, 50%, 60%, or 70%, and/or the pore diameter of the base film is 100 nm to 800 nm, such as 100 nm, 200 nm, 300 nm, 400 nm, 500 nm, 600 nm, 700 nm, or 800 nm, and/or the areal density of the base film is 2 g/m² to 10 g/m², such as 2 g/m², 3 g/m², 4 g/m², 5 g/m², 6 g/m², 7 g/m², 8 g/m², 9 g/m², or 10 g/m². When the porosity of the base film is 30% to 70%, an overly thin base film caused by excessive pores, which increases thermal shrinkage of the base film, can be avoided; and hindrance to electrolyte mass transfer due to insufficient pores, which reduces the Li⁺ mass transfer efficiency, can be reduced. When the pore diameter of the base film is 100 nm to 800 nm, localized thinning of the base film due to overly large pores, which increases thermal shrinkage of the base film, can be mitigated, and the hindrance to electrolyte mass transfer due to overly small pores, which reduces the Li⁺ mass transfer efficiency, can be reduced. When the areal density of the base film is 2 g/m² to 10 g/m², an overly thin base film caused by an overly low areal density, which increases thermal shrinkage of the base film, can be avoided; and hindrance to electrolyte mass transfer due to an overly high areal density, which reduces the Li⁺ mass transfer efficiency, can be reduced.

In some embodiments of this application, the components include at least one of polyolefin, polyether, polyetheretherketone, polyimide, polyethylene-propylene copolymer, polyvinylidene chloride, or fluorocarbon compound.

In one or more embodiments of this application, the above components all exhibit high temperature resistance, corrosion resistance, and good electrical insulation properties, and thus are suitable for use as materials for the base film or film layer of the separator.

In some embodiments of this application, the fluorocarbon compound includes at least one of polytetrafluoroethylene, polyvinyl fluoride, polyvinylidene fluoride, or polyvinylidene difluoride.

In one or more embodiments of this application, the above fluorocarbon compound exhibits high temperature resistance, corrosion resistance, and good electrical insulation properties. Additionally, with the high polarity and high dielectric constant, the material can facilitate the ionization of lithium salts and can swell in the electrolyte.

In some embodiments of this application, the functional layer includes at least one of inorganic functional material and/or organic functional material.

In one or more embodiments of this application, the functional layer includes at least one of an inorganic functional material and/or organic functional material, and functions of the functional material are not limited. A material suitable for being interposed between base films according to existing technologies can be used.

In some embodiments of this application, the inorganic functional material includes at least one of Al₂O₃, AlO(OH), SiO₂, TiO₂, MgO, CaO, BaSO₄, Mg(OH)₂, SnO₂, ZnO, ZrO₂, Y₂O₃, NiO, CeO₂, SrTiO₃, BaTiO₃, or MgF₂.

In one or more embodiments of this application, the above inorganic functional material has a low heat transfer rate, which can limit the expansion of thermal runaway points in the battery and extend battery life by absorbing trace amounts of water in the electrolyte. Additionally, other inorganic functional materials can be used for modification. For example, materials such as LiNbO₃ or CdS, which generate a self-generated electric field under pressure polarization or electric field polarization, can further enhance the ionic conductivity of the separator.

In some embodiments of this application, the separator further includes a bonding layer, where the bonding layer bonds the functional layer and the base film.

In one or more embodiments of this application, the presence of the bonding layer ensures that the functional layer is less likely to detach from the base film.

In some embodiments of this application, a weight percentage of the inorganic functional material is 30% to 50%, Dᵥ50 is 0.2 µm to 1.2 µm, and a weight percentage of the bonding layer is 10% to 20%.

In one or more embodiments of this application, the weight percentage of the inorganic functional material is 30% to 50%, such as 30%, 40%, or 50%; Dᵥ50 is 0.2 µm to 1.2 µm, such as 0.2 µm, 0.3 µm, 0.4 µm, 0.5 µm, 0.6 µm, 0.7 µm, 0.8 µm, 0.9 µm, 1.0 µm, 1.1 µm, or 1.2 µm; and the weight percentage of the bonding layer is 10% to 20%, such as 10%, 15%, or 20%. This configuration allows the functional layer to perform a corresponding function while reducing the detachment of the functional material from the functional layer, and enables the separator to maintain performance stability during long-term charge-discharge cycles.

In some embodiments of this application, the organic functional material includes at least one of cellulose and a derivative thereof, polyolefin, polyamide, polyethylene terephthalate, polyvinylidene difluoride, polyacrylonitrile, polymethyl methacrylate, or polyethylene oxide.

In one or more embodiments of this application, cellulose and a derivative thereof are used to enhance the thermal stability of the separator; polyolefin, polyethylene terephthalate, and polymethyl methacrylate are used to improve the chemical stability of the separator; polyacrylonitrile and polyamide are used to enhance both the chemical and thermal stability of the separator; polyvinylidene difluoride is used to improve the thermal stability and chemical stability of the separator and can enhance the ionic conductivity of the separator after pressure polarization or electric field polarization; and polyethylene oxide is used to improve the wettability of the separator. Additionally, other organic functional materials known in the art, such as polyvinyl chloride, can also be used for modification.

In some embodiments of this application, a thickness of the separator is 5 µm to 30 µm.

In one or more embodiments of this application, when the thickness of the separator is 5 µm to 30 µm, such as 5 µm, 10 µm, 15 µm, 20 µm, 25 µm, or 30 µm, a strength of the separator can meet practical usage requirements, and the hindrance to electrolyte mass transfer due to an overly thick separator, which reduces the Li⁺ mass transfer efficiency, can be further reduced.

In some embodiments of this application, a preparation method of the separator includes the following steps: performing electrospinning through at least two dispensing structures to obtain a base film; and attaching a functional layer to a surface of the base film, and pressure-compositing the functional layer with another base film.

In one or more embodiments of this application, the dispensing structures are used to eject electrospun fibers, including but not limited to needles or nozzles. The electrospinning method allows a polymer solution or melt to become charged droplets under a high-voltage electric field until the polymer droplets form a Taylor cone under the electric field and subsequently form a jet. The jet dries during its travel to a collector (that is, substrate) and deposits on the collector to form the base film. The functional layer and the base film are pressure-composited to form the separator.

In some embodiments of this application, in the step of performing electrospinning through the at least two dispensing structures, a used electrospinning device includes any one of dual-needle electrospinning device, multi-needle electrospinning device, rotating disk electrospinning device, conjugate electrospinning device, or needleless electrospinning device.

In one or more embodiments of this application, the dual-needle electrospinning device, multi-needle electrospinning device, rotating disk electrospinning device, and conjugate electrospinning device are all needle-based electrospinning devices, with controllable jet shapes, resulting in film materials with good uniformity and consistent thickness through spinning. The rotating disk electrospinning method can ensure consistency of the spun film through substrate rotation. The conjugate electrospinning method allows for the controlled preparation of film components and structures by setting an outer electrospinning solution and an inner electrospinning solution. The needleless electrospinning devices have the advantages of high fiber output, simple device structure, resistance to clogging, and ease of cleaning.

In some embodiments of this application, the step of performing electrospinning through the at least two dispensing structures to obtain the base film includes: feeding an electrospinning solution into the dispensing structures using a top-down or lateral liquid supply method, so that electrospun fibers are collected on a substrate; and then removing the substrate to form the base film.

In one or more embodiments of this application, using a top-down or lateral liquid supply method can reduce the issue of bubble formation associated with bottom-up liquid supply in the conventional spinning devices. Methods for removing the substrate include, but are not limited to, alkali washing, peeling, or extraction.

In some embodiments of this application, a spinning rate of the electrospinning device is 0.5 ml/h to 2 ml/h, an environmental humidity is less than or equal to 30%, and a voltage is 15 kV to 20 kV.

In one or more embodiments of this application, the spinning rate is 0.5 ml/h to 2 ml/h, such as 0.5 ml/h, 1.0 ml/h, 1.5 ml/h, or 2.0 ml/h. This ensures that the spun fibers ejected from the jet outlet (such as needle) is sufficient to maintain a continuous jet while avoiding the situation where the jet reaches the collector before drying, which could lead to the formation of beaded or ribbon-like fibers. The environmental humidity is less than or equal to 30%, such as less than or equal to 10%, less than or equal to 20%, or less than or equal to 30%. This can reduce the situation where the jet reaches the collector before drying. The voltage of 15 kV to 20 kV reduces a possibility of beaded defects due to excessively low voltage occur, and a possibility of increased jet volume and faster jet speed due to excessively high voltage, which makes stretching and splitting of the jet more difficult, leading to larger fiber diameters and poorer uniformity, resulting in beaded defects.

In some embodiments of this application, in the step of attaching the functional layer to the surface of the base film and pressure-compositing the function layer with another base film, a pressure application method is hot pressing or cold pressing; and/or the method of attaching the functional layer to the surface of the base film includes coating, electrospinning, or directly covering the surface of the base film with the film-like functional layer.

In the above technical solution of this application, the method for attaching the functional layer to the surface of the base film includes coating, electrospinning, or directly covering the surface of the base film with the film-like functional layer. The coating method includes gravure or micro-gravure coating. The electrospinning method includes single-needle electrospinning, dual-needle electrospinning, multi-needle electrospinning, rotating disk electrospinning, conjugate electro spinning, or needleless electrospinning. After the functional layer is attached to the surface of one base film, the functional layer is interposed between two base films, and the separator with the functional layer is prepared using hot pressing or cold pressing.

This application further provides a battery cell including the separator described in the above technical solution.

This application further provides a battery including the battery cell described in the above technical solution.

This application further provides an electric device including the battery described in the above technical solution.

The beneficial effects of a technical solution of this application include achieving performance control of the base film and even the separator by incorporating multiple components with controllable contents in the film layers of the base film.

### DESCRIPTION OF EMBODIMENTS

The technical solutions in the embodiments of this application will be clearly and thoroughly described below. It is clear that the described embodiments are only some but not all embodiments of this application. Based on the embodiments in this application, all other embodiments obtained by those skilled in the art without creative efforts fall within the protection scope of this application.

Additionally, the technical solutions of various embodiments can be combined with each other, provided that such combinations can be implemented by those skilled in the art. When combinations of technical solutions are contradictory or cannot be implemented, such combinations should be deemed not to exist and are not within the protection scope claimed in this application.

The following detailed description specifically discloses the embodiments of the separator, electrode assembly, battery cell, battery, and electric device of this application. However, unnecessary detailed descriptions may be omitted. For example, detailed descriptions of well-known matters or repeated descriptions of substantially identical structures may be omitted to avoid unnecessarily lengthy descriptions and to facilitate understanding by those skilled in the art. Additionally, the drawings and the following description are provided to enable those skilled in the art to fully understand this application and are not intended to limit the subject matter described in the claims.

A "range" disclosed in this application is defined in the form of lower and upper limits, where a given range is defined by selecting a lower limit and an upper limit, and the selected lower and upper limits define the boundaries of a specific range. Ranges defined in this manner may include or exclude the endpoints and can be arbitrarily combined, meaning any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of any combination of real numbers between a and b, where both a and b are real numbers. For example, the numerical range "0 to 5" means that all real numbers between "0 to 5" are listed herein, and "0 to 5" is merely an abbreviated representation of these numerical combinations. Additionally, when a parameter is expressed as an integer greater than or equal to 2, it is equivalent to disclosing that the parameter is, for example, an integer 2, 3, 4, 5, 6, 7, 8, 9, 10, 11, 12, or the like.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, preferably sequentially. For example, if a method includes steps (a) and (b), it means that the method may include steps (a) and (b) performed sequentially, or steps (b) and (a) performed sequentially. For example, if it is mentioned that the method may further include step (c), it means that step (c) can be added to the method in any position, such as including steps (a), (b), and (c), or steps (a), (c), and (b), or steps (c), (a), and (b).

Batteries mentioned in the art include lithium-ion batteries. Lithium-ion batteries are currently widely used in battery electric vehicles and hybrid electric vehicles.

A battery cell includes a positive electrode plate, a negative electrode plate, an electrolyte, and a separator. Operation of lithium-ion battery cells primarily relies on the movement of lithium ions between the positive and negative electrode plates.

After slurry coating, drying, and rolling, secondary battery electrode plates form a multilayer composite structure including a current collector and a coating on at least one surface of the current collector.

A separator is a material that separates the positive and negative electrodes of a battery to prevent short circuits of the battery.

A battery cell is a basic unit implementing conversion between chemical energy and electrical energy, including a positive electrode, a negative electrode, a separator, and an electrolyte.

A film layer is a film matrix with a specific structure composed of several components that form a base film.

A base film is a film is formed by one or more film layers in a specific structure.

A separator is a film formed by a base film, which may include a functional layer, where the functional layer is interposed between base films or applied to a surface of the base film.

In related technologies, a multilayer composite separator cannot achieve customized base film components and multiple functions matching relevant application scenarios to meet the needs of different batteries. Therefore, there is an urgent need for a separator capable of meeting the requirements of various batteries.

A main objective of this application is to provide a separator aimed at meeting the design requirements for the final performance of the base film and the separator through the controllable design of component content in the base film.

To achieve the above objective, the separator proposed in this application includes at least two base films and a functional layer interposed between two adjacent base films, where the base film includes at least two components.

In one or more embodiments of this application, the performance of the base film and even the separator is controlled by incorporating multiple components with controllable contents in the base film and providing a corresponding functional layer interposed between two adjacent base films. Since the base film includes different components with controllable contents, the performance of each component of the base film can be complementary, and the performance is controllable due to the controllable contents. The functional layer can be designed according to actual needs, for example, the functional layer may be used for thermal insulation and/or improving chemical stability of the separator and/or enhancing wettability of the separator.

In some embodiments of this application, the base film includes at least two film layers, and each film layer includes at least two components.

In one or more embodiments of this application, through the composite of film layers with controllable components and defined structures, the performance of the base film is controllable due to the controllable contents of the components based on the components and complementary structures of the film layers. For example, two film layers are provided with each film layer including two components, namely, polyethylene and polypropylene, and then a resulting composite base film combines the properties of both polymers of polyethylene and polypropylene, namely, a high melting point and stability of polypropylene and the good wettability of polyethylene. The performance can be controlled and customized by adjusting contents of polyethylene and polypropylene. To be specific, an increase in a percentage of polypropylene content can increase a melting point and improve stability of the corresponding film layer, while an increase in a percentage of polyethylene content can improve wettability of a corresponding film layer. Due to the different structures of the two film layers, the final performance such as melting point, stability, and wettability of the separator formed by the two film layers is also affected by the combination effect of the structures of the two film layers. The functional layer can be designed according to actual needs, for example, the functional layer may be used for thermal insulation and/or improving the chemical stability of the separator and/or enhancing the wettability of the separator.

In some embodiments of this application, two to four film layers are provided with each film layer including two to four components.

In one or more embodiments of this application, when two to four film layers are provided, such as two, three, or four layers, thermal shrinkage of the base film can be kept within an appropriate range, and excessively large internal resistance of the electrode assembly due to an overly thick base film, which affects Li⁺ mass transfer, can be reduced. When each film layer includes two to four components, such as two, three, or four components, precise control of the separator performance can be achieved by controlling the component contents in the film layers and combining film layers with different structures.

In some embodiments of this application, a thickness of the base film is 3 µm to 15 µm.

In one or more embodiments of this application, when the thickness of the base film is 3 µm to 15 µm, such as 3 µm, 4 µm, 5 µm, 6 µm, 7 µm, 8 µm, 9 µm, 10 µm, 11 µm, 12 µm, 13 µm, 14 µm, or 15 µm, a sufficient thickness of the base film can reduce the risk of short circuits in the electrode assembly due to increased thermal shrinkage of the base film caused by excessive thinning of the base film, and an excessively large internal resistance of the electrode assembly caused by an overly thick base film, which affects Li⁺ mass transfer, can be reduced. For example, when two or more base films are provided, a functional layer can be provided between two adjacent base films to endow the separator with functions such as thermal stability, chemical stability, and piezoelectric performance.

In some embodiments of this application, a porosity of the base film is 30% to 70%, and/or a pore diameter of the base film is 100 nm to 800 nm, and/or an areal density of the base film is 2 g/m² to 10 g/m².

In one or more embodiments of this application, the porosity of the base film is 30% to 70%, such as 30%, 40%, 50%, 60%, or 70%, the pore diameter of the base film is 100 nm to 800 nm, such as 100 nm, 200 nm, 300 nm, 400 nm, 500 nm, 600 nm, 700 nm, or 800 nm, and the areal density of the base film is 2 g/m² to 10 g/m², such as 2 g/m², 3 g/m², 4 g/m², 5 g/m², 6 g/m², 7 g/m², 8 g/m², 9 g/m², or 10 g/m². When the porosity of the base film is 30% to 70%, an overly thin base film caused by excessive pores, which increases thermal shrinkage of the base film, can be avoided; and hindrance to electrolyte mass transfer due to insufficient pores, which reduces the Li⁺ mass transfer efficiency, can be reduced. When the pore diameter of the base film is 100 nm to 800 nm, localized thinning of the base film due to overly large pores, which increases thermal shrinkage of the base film, can be mitigated, and the hindrance to electrolyte mass transfer due to overly small pores, which reduces the Li⁺ mass transfer efficiency, can be reduced. When the areal density of the base film is 2 g/m² to 10 g/m², an overly thin base film caused by an overly low areal density, which increases thermal shrinkage of the base film, can be avoided; and hindrance to electrolyte mass transfer due to an overly high areal density, which reduces the Li⁺ mass transfer efficiency, can be reduced.

In some embodiments of this application, the components include at least one of polyolefin, polyether, polyetheretherketone, polyimide, polyethylene-propylene copolymer, polyvinylidene chloride, or fluorocarbon compound.

In one or more embodiments of this application, the above components all exhibit high temperature resistance, corrosion resistance, and good electrical insulation properties, and thus are suitable for use as materials for the base film or film layer of the separator.

In some embodiments of this application, the fluorocarbon compound includes at least one of polytetrafluoroethylene, polyvinyl fluoride, polyvinylidene fluoride, or polyvinylidene difluoride.

In one or more embodiments of this application, the above fluorocarbon compound exhibits high temperature resistance, corrosion resistance, and good electrical insulation properties. Additionally, with the high polarity and high dielectric constant, the material can facilitate the ionization of lithium salts and can swell in the electrolyte.

In some embodiments of this application, the functional layer includes at least one of an inorganic functional material and/or organic functional material.

In one or more embodiments of this application, the functional layer includes at least one of an inorganic functional material and/or organic functional material, and functions of the functional material are not limited. The material may be a material that increases the thermal stability or chemical stability of the separator or a material that endows the separator with the piezoelectric property, as long as it is suitable for being interposed between base films according to existing technologies.

In some embodiments of this application, the inorganic functional material includes, but is not limited to, at least one of Al₂O₃, AlO(OH), SiO₂, TiO₂, MgO, CaO, BaSO₄, Mg(OH)₂, SnO₂, ZnO, ZrO₂, Y₂O₃, NiO, CeO₂, SrTiO₃, BaTiO₃, or MgF₂.

In one or more embodiments of this application, the above inorganic functional material has a low heat transfer rate, which can limit the expansion of thermal runaway points in the battery and extend battery life by absorbing trace amounts of water in the electrolyte. Additionally, other inorganic functional materials can be used for modification. For example, materials such as LiNbO₃ or CdS, which generate a self-generated electric field under pressure polarization or electric field polarization, can further enhance the ionic conductivity of the separator.

In some embodiments of this application, the separator further includes a bonding layer, where the bonding layer bonds the functional layer and the base film.

In one or more embodiments of this application, the presence of the bonding layer ensures that the functional layer is bonded to the base film, making it less likely to detach from the base film.

In some embodiments of this application, a weight percentage of the inorganic functional material is 30% to 50%, Dᵥ50 is 0.2 µm to 1.2 µm, and a weight percentage of the bonding layer is 10% to 20%.

In one or more embodiments of this application, the weight percentage of the inorganic functional material is 30% to 50%, such as 30%, 40%, or 50%; Dᵥ50 is 0.2 µm to 1.2 µm, such as 0.2 µm, 0.3 µm, 0.4 µm, 0.5 µm, 0.6 µm, 0.7 µm, 0.8 µm, 0.9 µm, 1.0 µm, 1.1 µm, or 1.2 µm; and the weight percentage of the bonding layer is 10% to 20%, such as 10%, 15%, or 20%. This is because an inorganic functional material with a weight percentage of 30% to 50% can perform corresponding functions suitable for the separator and an electrode assembly, a battery cell, a battery, and an electric device containing the separator. Dᵥ50 of 0.2 µm to 1.2 µm allows the functional layer to perform a corresponding function while reducing the detachment of the functional material from the functional layer and minimizing the weight percentage of the inorganic functional material by providing a sufficiently large specific surface area of the inorganic functional material. A bonding layer with a weight percentage of 10% to 20% can reduce the detachment of the functional material from the functional layer during long-term charge-discharge cycles. The above configuration enables the separator to maintain performance stability during long-term charge-discharge cycles.

In some embodiments of this application, the organic functional materials include at least one of cellulose and a derivative thereof, polyolefin, polyamide, polyethylene terephthalate, polyvinylidene difluoride, polyacrylonitrile, polymethyl methacrylate, or polyethylene oxide.

In one or more embodiments of this application, cellulose and a derivative thereof are used to enhance the thermal stability of the separator; polyolefin, polyethylene terephthalate, and polymethyl methacrylate are used to improve the chemical stability of the separator; polyacrylonitrile and polyamide are used to enhance both the chemical and thermal stability of the separator; polyvinylidene difluoride is used to improve the thermal stability and chemical stability of the separator and can enhance the ionic conductivity of the separator after pressure polarization or electric field polarization; and polyethylene oxide is used to improve the wettability of the separator. Additionally, other organic functional materials known in the art, such as polyvinyl chloride, can also be used for modification.

In some embodiments of this application, a thickness of the separator is 5 µm to 30 µm.

In one or more embodiments of this application, when the thickness of the separator is 5 µm to 30 µm, such as 5 µm, 10 µm, 15 µm, 20 µm, 25 µm, or 30 µm, a strength of the separator can meet practical usage requirements, and the hindrance to electrolyte mass transfer due to an overly thick separator, which reduces the Li⁺ mass transfer efficiency, can be further reduced.

In some embodiments of this application, a preparation method of the separator includes the following steps: performing electrospinning through at least two dispensing structures to obtain a base film; and attaching a functional layer to a surface of the base film, and pressure-compositing the functional layer with another base film.

In one or more embodiments of this application, the dispensing structures are used to eject electrospun fibers, including but not limited to needles or nozzles. The electrospinning method allows a polymer solution or melt to become charged droplets under a high-voltage electric field until the polymer droplets form a Taylor cone under the electric field and subsequently form a jet. The jet dries during its travel to a collector (that is, substrate) and deposits on the collector to form the base film. The functional layer and the base film are pressure-composited to form the separator. For example, the following specific steps may be used: preparing an electrospinning solution; setting parameters in the electrospinning device, including but not limited to voltage, spinning rate, jet outlet spacing, and jet outlet-to-substrate spacing, and setting an environmental humidity in an environment where the electrospinning device is located; allowing the electrospinning solution to form a jet under the action of voltage, which is deposited on the substrate through a jet outlet. An outlet of the dispensing structure is the jet outlet, and the dispensing structure includes a needles and a nozzle. When the needle is used, the jet outlet spacing is a needle spacing, and the jet outlet-to-substrate spacing is a needle-to-substrate spacing. When no needles are used, the jet outlet spacing is a spacing from a nozzle, and the jet outlet-to-substrate spacing is a nozzle-to-substrate spacing.

In some embodiments of this application, in the step of performing electrospinning through the at least two dispensing structures, a used electrospinning device includes any one of dual-needle electrospinning device, multi-needle electrospinning device, rotating disk electrospinning device, conjugate electrospinning device, or needleless electrospinning device.

In one or more embodiments of this application, the dual-needle electrospinning device, multi-needle electrospinning device, rotating disk electrospinning device, and conjugate electrospinning device are all needle-based electrospinning devices, with controllable jet shapes, resulting in film materials with good uniformity and consistent thickness through spinning. The rotating disk electrospinning method can ensure consistency of the spun film through substrate rotation. The conjugate electrospinning method allows for the controlled preparation of film components and structures by setting an outer electrospinning solution and an inner electrospinning solution. The needleless electrospinning devices have the advantages of high fiber output, simple device structure, resistance to clogging, and ease of cleaning.

In some embodiments of this application, the step of performing electrospinning through the at least two dispensing structures to obtain the base film includes: feeding an electrospinning solution into the dispensing structures using a top-down or lateral liquid supply method, so that electrospun fibers are collected on a substrate; and then removing the substrate to form the base film.

In one or more embodiments of this application, using a top-down or lateral liquid supply method can reduce the issue of bubble formation associated with bottom-up liquid supply in the conventional spinning devices. Methods for removing the substrate include, but are not limited to, alkali washing, peeling, or extraction.

In some embodiments of this application, a spinning rate of the electrospinning device is 0.5 ml/h to 2 ml/h, an environmental humidity is less than or equal to 30%, and a voltage is 15 kV to 20 kV, so that the electrospun fibers can be collected on the substrate; and then the substrate is removed through alkali washing or peeling.

In one or more embodiments of this application, the spinning rate is 0.5 ml/h to 2 ml/h, such as 0.5 ml/h, 1.0 ml/h, 1.5 ml/h, or 2.0 ml/h. This ensures that the spun fibers ejected from the jet outlet (such as needle) is sufficient to maintain a continuous jet while avoiding the situation where the jet reaches the collector before drying, which could lead to the formation of beaded or ribbon-like fibers. The environmental humidity is less than or equal to 30%, such as less than or equal to 10%, less than or equal to 20%, or less than or equal to 30%. This can reduce the situation where the jet reaches the collector before drying. The voltage of 15 kV to 20 kV reduces a possibility of beaded defects due to excessively low voltage, and a possibility of increased jet volume and faster jet speed due to excessively high voltage, which makes stretching and splitting of the jet more difficult, leading to larger fiber diameters and poorer uniformity, resulting in beaded defects.

In some embodiments of this application, in the step of attaching the functional layer to the surface of the base film and pressure-compositing the function layer with another base film, a pressure application method is hot pressing or cold pressing; and/or the method of attaching the functional layer to the surface of the base film includes coating, electrospinning, or directly covering the surface of the base film with the film-like functional layer.

In the above technical solution of this application, the method for attaching the functional layer to the surface of the base film includes coating, electrospinning, or directly covering the surface of the base film with the film-like functional layer. The coating method includes gravure or micro-gravure coating. The electrospinning method includes single-needle electrospinning, dual-needle electrospinning, multi-needle electrospinning, rotating disk electrospinning, conjugate electrospinning, or needleless electrospinning. After the functional layer is attached to the surface of one base film, the functional layer is interposed between two base films, and the separator with the functional layer is prepared using hot pressing or cold pressing.

This application further provides a battery cell including the separator described in the above technical solutions.

Since the electrode assembly adopts all the technical solutions of the above embodiments, it has at least all the beneficial effects brought by the technical solutions of the above embodiments. The details are not repeated herein.

This application further provides a battery including the battery cell described in the above technical solutions.

Since the battery adopts all the technical solutions of the above embodiments, it has at least all the beneficial effects brought by the technical solutions of the above embodiments. The details are not repeated herein.

This application further provides an electric device including the battery described in the above technical solutions.

Since the electric device adopts all the technical solutions of the above embodiments, it has at least all the beneficial effects brought by the technical solutions of the above embodiments. The details are not repeated herein.

The beneficial effects of a technical solution of this application include achieving performance control of the base film and even the separator by incorporating multiple components with controllable contents in the film layers of the base film.

Specific examples are as follows.

### Example 1

(1) A separator was prepared with polyethylene/polypropylene used as an outer base film though multi-needle electrospinning and composite weaving (thickness: 12 µm, areal density: 4 g/m², average pore diameter: 400 nm, and porosity: 30%).
(2) Preparation of electrospun base film: A powdered polymer mixture with a ratio of 80% (polypropylene)/20% (polyethylene) was dried and added to a mixed polar solvent of acetone:N,N-dimethylformamide (1:4 w/w), and was dissolved at 75°C with magnetic stirring for 6 h at a stirring speed of 1000 r/min. The mixture was stirred to ensure thorough dispersion, obtaining an electrospinning solution with a solute mass percentage of 12wt%. Electrospinning was performed using a multi-needle rotating disk electrospinning device to prepare the electrospun film.
(3) The multi-needle electrospinning device adopted a dual-needle rotating disk method with a top-down liquid supply. The rotating disk was driven and received fibers from two needles, achieving a consistent composite base film through rotation, with a needle spacing of 10 cm and a needle-to-substrate spacing of 15 cm. A spinning rate was 1 ml/h, an environmental humidity was less than or equal to 30%, and a voltage was 15 kV. The fibers were collected via the rotating disk, and a substrate was removed by peeling. To remove the solvents acetone and DMF, the obtained film layer was placed in a vacuum oven at 60°C for 12 hours. The dried film layer was then hot-pressed at 80°C and 1000 MPa, and placed in an oven at 80°C for 10 minutes, to obtain a PP/PE (0.8:0.2) composite base film.
(4) Preparation of functional layer: Alumina, polyacrylate, and carboxymethyl cellulose were mixed uniformly in a solvent at a ratio of 3:3:1, with a weight percentage of alumina particles at 40%, a weight percentage of a binder at 15%, and an average particle size of inorganic particles at Dᵥ50 of 0.2 µm to 1.2 µm. A coating has a thickness of 1 µm, and was applied to one side of the composite film layer prepared in step (3). The film was then passed through rollers and laminated with another composite base film to form a double-layer composite separator. With an oven temperature controlled at 65°C, the separator was dried for 5 min, and pressed at a pressure of 100 MPa to obtain the separator in one or more examples of this application.

The differences of the remaining examples and comparative examples from Example 1 are shown in Table 1/Table 2. Contents not listed in Table 1/Table 2 for the remaining examples and comparative examples are the same as in Example 1.

**Table 1**

| | Liquid supply method | Needle | | | Voltage | Environm ental humidity | Substrate | Inorganic functional layer | Thermal shrinkage rate | Ionic conduct ivity | Separator air permeability |
|---|---|---|---|---|---|---|---|---|---|---|---|
| | | Number | Arrangement | Solute and component concentration in needles | | | | | | | |
| Example 1 | Top-down supply | Dual needles | Arranged on one side of a substrate with a needle spacing of 10 cm | 80% (polypropylene)/2 0% (polyethylene) | 15 kV | ≤30% | Rotating, and removed by peeling | Alumina | 3.5% | 1.2×10⁻³ S/m | 337s/100cc |
| Example 2 | Lateral supply | Four needles | Two needles on each side of a substrate with a needle spacing of 10 cm | 80% (polypropylene)/2 0% (polyethylene) | 15 kV and 20 kV for two needles on each side respectively | ≤30% | Rotating, and removed by alkali washing | Alumina | 4.3% | 1.0×10⁻³ S/m | 365s/100cc |
| Example 3 | Lateral supply | Four needles | Two needles on each side of a substrate with a needle spacing of 10 cm | Two needles on one side are polypropylene and polyethylene respectively | 15 kV and 20 kV for two needles on each side respectively | ≤30% | Rotating, and removed by alkali washing | Alumina | 3.0% | 1.2×10⁻³ S/m | 384s/100cc |
| Example 4 | Top-down supply | Single needle | Coaxial spinning | An outer layer is polypropylene, and an inner layer is polyethylene | 15 kV | ≤30% | Rotating, and removed by peeling | Alumina | 3.6% | 0.9×10⁻³ S/m | 373s/100cc |
| Example 5 | Lateral supply | Needleless electrospinnin g, and two dispensing structures | Spacing 10 cm | 80% (polypropylene)/2 0% (polyethylene) | 15 kV | ≤30% | Rotating, and removed by peeling | Alumina | 5.0% | 1.0×10⁻³ S/m | 340s/100cc |
| Example 6 | Lateral supply | Four needles | Two needles on each side of a substrate with a spacing of 10 cm | Two needles on one side are polypropylene and polyethylene respectively | 15 kV and 20 kV for two needles on each side respectively | ≤30% | Rotating, and removed by alkali washing | Alumina | 3.2% | 1.0×10⁻³ S/m | 348s/100cc |
| Example 7 | Lateral supply | Four needles | Two needles on each side of a substrate with a spacing of 15 cm | Two needles on one side are polypropylene and polyethylene respectively | 15 kV and 20 kV for two needles on each side respectively | ≤30% | Rotating, and removed by alkali washing | Alumina | 4.6% | 1.1×10⁻³ S/m | 340s/100cc |
| Example 8 | Lateral supply | Four needles | Two needles on each side of a substrate with a spacing of 20 cm | Two needles on one side are polypropylene and polyethylene respectively | 15 kV and 20 kV for two needles on each side respectively | ≤30% | Rotating, and removed by alkali washing | Alumina | 5.2% | 1.2×10⁻³ S/m | 319s/100cc |
| Example 9 | Lateral supply | Four needles | Two needles on each side of a substrate with a spacing of 25 cm | Two needles on one side are polypropylene and polyethylene respectively | 15 kV and 20 kV for two needles on each side respectively | ≤30% | Rotating, and removed by alkali washing | Alumina | 6.2% | 1.3×10⁻³ S/m | 324s/100cc |

**Table 2**

| | Separator | Functional layer | Thermal shrinkage rate | Ionic conductivity | Separator air permeability |
|---|---|---|---|---|---|
| Comparative example 1 | PP | / | 15.4% | 0.6×10⁻³ S/m | 448s/100cc |
| Comparative example 2 | PE | / | 86.5% | 0.8×10⁻³ S/m | 422s/100cc |
| Comparative example 3 | PP/PE | Alumina | 8.2% | 0.5×10⁻³ S/m | 484s/100cc |

Comparative examples 1 to 3 are existing separators, all with a thickness of 12 µm and a porosity of 30%. In Comparative example 3, the separator is formed by a 7-µm PP separator and a 5-µm PE separator, with the inorganic functional layer prepared in the same manner as in Example 1.

From the test results, it can be learned that electrospinning enables component design at the base film layer level. Thermal shrinkage rates in all examples are better than that of the PE separator, and the intermediate alumina functional coating further enhances the heat resistance of the separator, making the prepared separator superior to the PP separator. The reason why heat resistance in the examples is better than that in Comparative example 3 is that the improved base film composition better adapts to the heat resistance of alumina during heating compared with that of the PE base film.

The ionic conductivity and air permeability of the composite separator prepared by electrospinning are superior to those of the comparative examples. This is due to the uniformity of the electrospun film, which avoids pore blockage caused by conventional casting crystallization, resulting in better ionic conductivity and air permeability.

Thermal shrinkage rate measurement: The separator is cut into a circular disc of R50, and placed in an oven at 130°C for 1 h, and the diameter shrinkage of the separator is measured using a vernier caliper.

Air permeability test method: Air permeability (Gurley value) is measured according to JIS P 8117:2009, using air as the gas for the air permeability measurement.

Ionic conductivity test method: The separator is tested for constant voltage AC impedance spectroscopy using a Bio-logic electrochemical workstation. The intercept of the impedance curve on the Nyquist plot with the real axis is Rs, and the ionic conductivity is obtained through comparison with the Rs parameter of a known standard conductivity sample.

The above descriptions are only preferred embodiments of this application and do not limit the patent scope of this application. Any equivalent structural transformations made under the inventive concept of this application using the contents of specification of this application, or direct/indirect applications in other related technical fields, are included within the patent protection scope of this application.

## Claims

1. A separator, comprising at least two base films and a functional layer interposed between two adjacent base films, wherein the base film comprises at least two components.

2. The separator according to claim 1, wherein the base film comprises at least two film layers with each film layer comprising at least two components.

3. The separator according to claim 2, wherein two to four film layers are provided with each film layer comprising two to four components.

4. The separator according to any one of claims 1 to 3, wherein a thickness of the base film is 3 µm to 15 µm.

5. The separator according to claim 4, wherein a porosity of the base film is 30% to 70%;
and/or a pore diameter of the base film is 100 nm to 800 nm;
and/or an areal density of the base film is 2 g/m² to 10 g/m².

6. The separator according to any one of claims 1 to 5, wherein the components comprise at least one of polyolefin, polyether, polyetheretherketone, polyimide, polyethylene-propylene copolymer, polyvinylidene chloride, or fluorocarbon compound.

7. The separator according to claim 6, wherein the fluorocarbon compound comprises at least one of polytetrafluoroethylene, polyvinyl fluoride, polyvinylidene fluoride, or polyvinylidene difluoride.

8. The separator according to any one of claims 1 to 7, wherein the functional layer comprises at least one of inorganic functional material and/or organic functional material.

9. The separator according to claim 8, wherein the inorganic functional material comprises at least one of Al₂O₃, AlO(OH), SiO₂, TiO₂, MgO, CaO, BaSO₄, Mg(OH)₂, SnO₂, ZnO, ZrO₂, Y₂O₃, NiO, CeO₂, SrTiO₃, BaTiO₃, or MgF₂.

10. The separator according to claim 9, wherein the separator further comprises a bonding layer, wherein the bonding layer bonds the functional layer and the base film.

11. The separator according to claim 10, wherein a particle diameter weight percentage of the inorganic functional material is 30% to 50%, Dᵥ50 is 0.2 µm to 1.2 µm, and a weight percentage of the bonding layer is 10% to 20%.

12. The separator according to claim 8, wherein the organic functional material comprises at least one of cellulose and a derivative thereof, polyolefin, polyamide, polyethylene terephthalate, polyvinylidene difluoride, polyacrylonitrile, polymethyl methacrylate, or polyethylene oxide.

13. The separator according to any one of claims 1 to 12, wherein a thickness of the separator is 5 µm to 30 µm.

14. A preparation method of the separator according to any one of claims 1 to 13, comprising the following steps:
performing electrospinning through at least two dispensing structures to obtain a base film, and interposing a functional layer between two base films to obtain the separator.

15. The preparation method of the separator according to claim 14, wherein in the step of performing electrospinning through the at least two dispensing structures, a used electrospinning device comprises any one of dual-needle electrospinning device, multi-needle electrospinning device, rotating disk electrospinning device, conjugate electrospinning device, or needleless electrospinning device.

16. The preparation method of the separator according to claim 15, wherein the step of performing electrospinning through the at least two dispensing structures to obtain the base film comprises:
feeding an electrospinning solution into the dispensing structures using a top-down or lateral liquid supply method, so that electrospun fibers are collected on a substrate; and then removing the substrate to form the base film.

17. The preparation method of the separator according to claim 16, wherein a spinning rate of the electrospinning device is 0.5 ml/h to 2 ml/h, an environmental humidity is less than or equal to 30%, and a voltage is 15 kV to 20 kV.

18. The preparation method of the separator according to claim 14 or 15, wherein in a step of attaching the functional layer to a surface of the base film, and pressure-compositing the functional layer with another base film, a pressure application method is hot pressing or cold pressing;
and/or a method of attaching the functional layer to the surface of the base film comprises coating, electrospinning, or directly covering the surface of the base film with a film-like functional layer.

19. A battery cell, comprising the separator according to any one of claims 1 to 13.

20. A battery, comprising the battery cell according to claim 19.

21. An electric device, comprising the battery according to claim 20.
